Europäisches Patentamt

European Patent Office

Office européen des brevets

(11) Publication number:

**0 396 350**
**A2**

## (12) EUROPEAN PATENT APPLICATION

(21) Application number: **90304617.5**

(51) Int. Cl.5: **F16K 3/36**

(22) Date of filing: **27.04.90**

(30) Priority: **27.04.89 JP 108941/89**

(43) Date of publication of application:
**07.11.90 Bulletin 90/45**

(84) Designated Contracting States:
**AT BE CH DE DK FR GB IT LI NL SE**

(71) Applicant: **Tochikubo, Shigeo**
**11-12 Noukendai 1-chome Kanazawa-ku**
**Yokohama-shi Kanagawa(JP)**

(72) Inventor: **Tochikubo, Shigeo**
**11-12 Noukendai 1-chome Kanazawa-ku**
**Yokohama-shi Kanagawa(JP)**

(74) Representative: **Parry, Christopher Stephen et al**
**PAGE, WHITE & FARRER 54 Doughty Street**
**London WC1N 2LS(GB)**

(54) **Switching valve for mixing hot and cold waters using lubricant tank.**

(57) The present invention relates to a switching valve for mixing hot and cold waters to be ordinarily used for a mixture cock for mixing hot and cold waters for exhausting, stopping or mixing the hot and cold waters, having a cylindrical lubricant tank having a lubricant outlet opened at the sliding surface of a switching valve in a valve body, and a movable cover slidably engaged with one side of the cylindrical lubricant tank, the movable cover so disposed as to be pressurized by hydraulic pressure of hot, cold water in the valve body to directly supply necessary lubricant to the sliding surface of the switching valve, thereby always readily sliding to open or close the switching valve.

Fig. 1

# SWITCHING VALVE FOR MIXING HOT AND COLD WATERS USING LUBRICANT TANK

## Field of the Invention

The present invention relates to a switching valve for mixing hot and cold waters to be ordinarily used for a mixture cock for mixing hot and cold waters for exhausting, stopping or mixing the hot and cold waters.

## Background of the Invention

A conventional single handle type switching valve for mixing hot and cold waters is composed to open or close inlets for hot and cold waters and to adjust the mixture amount of the hot and cold waters in the same valve body, to be formed in a cylindrical shape in a cylinder type switching valve and in a disc shape in a disc type switching valve. In the cylinder type switching valve, its cylindrical valve body is moved axially to open or close its inlet and the valve body of the cylinder is rotated to reversibly adjust the openings of the inlets for hot and cold waters to adjust the mixture amount of the hot and cold waters. In the disc type switching valve, the inlet side disc of two disc-type discs is fixed, and the adjusting side disc is slidable, and hot and cold waters are exhausted, stopped or mixed by planely sliding the slidable disc.

In the cylinder type switching valve of the conventional apparatus, a valve body contained in the cylinder is slid or rotated with respect to a watertight sealer made of rubber of synthetic resin provided at the cylinder side. The sealer is early worn, swelled, dissolved, or deteriorated to cause water to be leaked, and thus has disadvantages that the operating load is abnormally increased. The operating load eventually leads to ten and several times as large as the initial load not to be durable for use.

The disc type switching valve improves the disadvantages to use new ceramic material having high hardness and smooth sliding surface as its disc to prevent it from wearing, deteriorating, but since it has a difficulty of holding lubricant, it has still disadvantages that its operability cannot be suitably maintained.

In order to ordinarily prevent a switching valve from wearing, deteriorating or to maintain its operability for a long period of time, it is devised to coat it with lubricant such as silicone grease or the like, to sometimes provide a lubricant containing chamber to obtain necessary amount of lubricant, but water droplets mixed in the lubricant containing chamber forms a water film or layer as a time is elapsed so that the surface of the lubricant loses its activity to stop a function of supplying adhesively to the sliding surface, and to sometimes lose its function of lubricating while 90% or more of lubricant remains in the lubricant containing chamber. In the disc type switching valve, in order to increase sliding area and to minimize a linking at the time of waste of lubricant, its frictional resistance at the time of wiping lubricant is instantaneously increased so as not to reduce the surface roughness of the smooth sliding surface, and thus has disadvantages that, even if an operating lever of lever means is used, it exceeds its operating limit.

## Summary of the Invention

The inventor has previously proposed, in order to eliminate the disadvantages of the conventional device, a single cylinder type switching valve for mixing hot and cold waters, wherein smooth slide guiding plates formed with inlets for hot and cold waters disposed in the cylinder and the smooth sliding surfaces of the switching valve interposed between the guiding plates for hot and cold waters are planely sealed to eliminate the use of rubber watertight sealer to be readily damaged in a conventional cylinder type switching valve and to largely reduce the sealing surface in comparison with the sealing areas of the disc type switching valve.

Further, the inventor has previously proposed a mixture single cylinder type switching valve for mixing hot and cold waters, wherein smooth slid guiding plates formed with inlets for hot and cold waters disposed in the cylinder and the smooth sliding surfaces of the switching valve are planely sealed to readily accurately finish the smooth sliding surfaces of the switching valve and the slide guiding plates with a material such as inorganic high hardness material having less chemical change and less wear and deterioration, for example, special steel, stainless steel, ceramic, new ceramic material to use the material to provide excellent sealability and operability of the valve and long durable life.

Moreover, the inventor has previously proposed a single cylinder type switching valve for mixing hot and cold waters which has a switching valve for opening or closing inlets for hot and cold waters and a mixture valve for adjusting the openings of the inlets for hot and cold waters, separately formed to limit the operations for exhausting, stopping in the inlets for hot and cold waters by the switching valve to an extremely short range by a reciprocation along the axial direction of the cylinder to hold lubricant coating the sliding surfaces of the switching valve for a long period of time, to hold a sliding resistance alleviating state, to suppress the wear and deterioration of the sliding surface for a long period, and to maintain operability

However, according to these proposals, the supply of lubricant to the sliding surfaces of the switching valve is not yet improved, and the proposals still have problems in practical use.

Accordingly, the present invention provides improvements in lubricant supplying means for the sliding surfaces of a switching valve, and one object of the present invention is to provide a switching valve for mixing hot and cold waters, wherein a lubricant tank having a lubricant outlet opened at the sliding surface of a switching valve is provided to directly supply necessary lubricant to the sliding surface of the switching valve, thereby always readily sliding to open or close the switching valve.

Another object of the present invention is to provide a switching valve for mixing hot and cold waters, wherein a lubricant tank having a lubricant outlet opened at the sliding surface of a switching valve is provided to store a large quantity of lubricant in the tank to hold the supply of the lubricant to the sliding surface for a long period of time, thereby improving the number of durable life.

Yet another object of the present invention is to provide a switching valve for mixing hot and cold waters, wherein a cylindrical lubricant tank is provided in a valve body, a movable cover is slidably engaged with one side of the cylindrical lubricant tank, and the movable cover is so disposed as to be pressurized by hydraulic pressure of hot, cold water in the valve body to automatically pressurize the movable cover by the hydraulic pressure in the valve body to pressure lubricant contained in the lubricant tank to forcibly supply the lubricant from the lubricant outlet to the sliding surface of the switching valve to stably supply the lubricant to necessary position and to always readily slide to open or close the switching valve.

Still another object of the present invention is to provide a switching valve for mixing hot and cold waters, wherein a movable cover is slidably engaged with a cylindrical lubricant tank to entirely utilize the lubricant contained in the lubricant tank by the slide of the movable cover.

Still another object of the present invention is to provide a switching valve for mixing hot and cold waters, wherein a valve insertion port is formed at the lubricant outlet opened at the sliding surface of the switching valve, and a lubricant control valve is engaged within the valve insertion port to shut off the lubricant exhausted from the lubricant tank by the lubricant control valve to extrude the lubricant from a small gap formed between the outer surface of the lubricant control valve and the inner surface of the valve insertion port to supply the lubricant in small quantity necessary to slide the switching valve and to effectively supply the lubricant from the outer surface of the lubricant control valve to the wide range of the sliding surface, thereby largely extending the period of readily sliding the switching valve.

Still another object of the present invention is to provide a switching valve for mixing hot and cold waters, wherein a lubricant supply passage is formed at the sliding surface of the switching valve in connection to the lubricant outlet opened at the sliding surface of the switching valve to supply the lubricant extruded from the lubricant outlet through the lubricant supply passage to the position separated from the lubricant outlet to readily slide the switching valve.

Still another object of the present invention is to provide a switching valve for mixing hot and cold waters, wherein hot water is supplied to a spring holder passing through the lubricant tank to heat the lubricant of the lubricant tank to reduce the density of the lubricant to provide the spring holder for smoothly supplying the lubricant.

Still another object of the present invention is to provide a switching valve for mixing hot and cold waters, wherein a watertight O-ring disposed in a groove formed to surround inlets for hot and cold waters, disposed on the slide guiding plates for hot and cold waters is contacted under pressure with the inner peripheral surface of the external pressure shutting-off metal cylinder to readily form a watertight area having high reliability on the slide guiding plates for hot and cold waters and the inner peripheral surface of the external pressure shutting-off metal cylinder.

Still another object of the present invention is to provide a switching valve for mixing hot and cold waters, wherein the O-ring provided to form the watertight area between the slide guiding plate and the inner peripheral surface of the external pressure shutting-off metal cylinder for hot and cold waters is formed of soft material to provide high watertightness with small sealing margin to minimize the surface pressure of the guiding plate and the switching valve due to the increase of the sealing margin and to reduce the switching operating load by the guiding plate and the switching valve.

Still another object of the present invention is to provide a switching valve for mixing hot and cold waters, wherein a groove having a curved surface along the curved surface of the external pressure shutting-off metal cylinder is formed to form a watertight area having high reliability readily by the O-ring disposed in the groove by the slide guiding plate for hot and cold waters.

Still another object of the present invention is to provide a switching valve for mixing hot and cold waters, wherein a plurality of inlets for hot and cold waters for controlling temperature are formed inside the switching valve to accelerate control speed while increasing the flow rate of the water by the switching valve.

Still another object of the present invention is to provide a switching valve for mixing hot and cold waters, wherein the inlets for hot and cold waters for controlling temperature are so alternately formed inside and outside the switching valve by the continuous combination of alternately hot, cold, hot and cold waters or cold, cold and hot and hot waters by the switching valve.

Still another object of the present invention is to provide a switching valve for mixing hot and cold waters, wherein a switching valve having a plurality of temperature controlling inlets for hot and cold waters is split and formed inside and outside the switching valve, adhesively baked to be readily integrally molded.

Still another object of the present invention is to provide a switching valve for mixing hot and cold waters, wherein a switching valve having a plurality of temperature controlling inlets for hot and cold waters is split and formed inside and outside the switching valve is split into outer and inner cylinders as metal readily molded in an inner cylinder having a complicated shape, and engaged integrally.

Still another object of the present invention is to provide a switching valve for mixing hot and cold waters, wherein a plurality of inlets for hot and cold waters are formed in a circular, elliptical or rhombic shape, and a mixture valve for improving the accuracy of controlling temperature is provided.

Still another object of the present invention is to provide a switching valve for mixing hot and cold waters, wherein inlets for hot and cold waters at both sides and a plurality of inlets for hot and cold waters formed in a circular, elliptical or rhombic shape, disposed on the outer surface of the cylinder are provided, and a mixture valve having a large flow rate and fast controlling speed is provided.

Still another object of the present invention is to provide a switching valve for mixing hot and cold waters, wherein inlets for hot and cold waters are alternately disposed, and a mixture valve for improving the mixing performance of hot and cold waters is provided.

Still another object of the present invention is to provide a switching valve for mixing hot and cold waters, wherein the inlet faces of both sides of the mixture valve and the switching valve are moved without plane contact due to the maximum expansion of a thermostat without necessity of means for preventing a thermostat element from damaging due to expansion in the switching valve and mixture valve.

Still another object of the present invention is to provide a switching valve for mixing hot and cold waters, wherein main driving means for sliding and rotating is contained together with a controller in the same operation can, and the mechanism of the can composed to apply the internal cylindrical pressure only to the minimum diameter of the driving shaft.

Still another object of the present invention is to provide a switching valve for mixing hot and cold waters, wherein inlets for hot and cold waters are disposed on the same circumference, inlets for mixture, cold and hot waters are disposed between both the inlets for hot and cold waters, and a lower disc having a space for mounting a lubricant tank is provided.

Still another object of the present invention is to provide a switching valve for mixing hot and cold waters, wherein inlets for hot, cold waters and mixture hot and cold waters are disposed on the outer surface, a watertight packing is so provided as not to raise the sliding surface pressure by the sealing margin, and a lower disc for reducing an operating load is provided.

Still another object of the present invention is to provide a switching valve for mixing hot and cold waters, wherein the opening area of inlets for hot and cold waters and outlet for mixture water of a lower disc is balanced with the area of the bottom of the lower disc around the periphery including a movable cover slidably engaged with the lubricant tank, the lifting force of the lower disc due to the pressure of hot, cold or mixture water is canceled by the reaction of the upper opening, the sliding surface pressure is necessarily minimized, and the lower disc for largely reducing the operating load is provided.

These and other objects as may become apparent hereinafter have been attained by a switching valve for mixing hot and cold waters comprising a cylindrical lubricant tank opened with a lubricant outlet at the sliding surface of a switching valve in a valve body, and a movable cover slidably engaged with one side of the lubricant tank to pressurize the movable valve by hydraulic pressure of hot, cold water in the valve body.

## Description of the Preferred Embodiments

For a better understanding of the invention as well as other objects and further features thereof, preferred embodiments of the invention will be explained with reference to the accompanying drawings in which:

FIG. 1 is a lateral sectional side view of a cylinder type switching valve for mixing hot and cold waters according to the present invention;

FIG. 2 is a side view of the switching valve;

FIGS. 3 and 4 are lateral sectional side views showing another embodiment of a switching valve for mixing hot and cold waters according to the present invention;

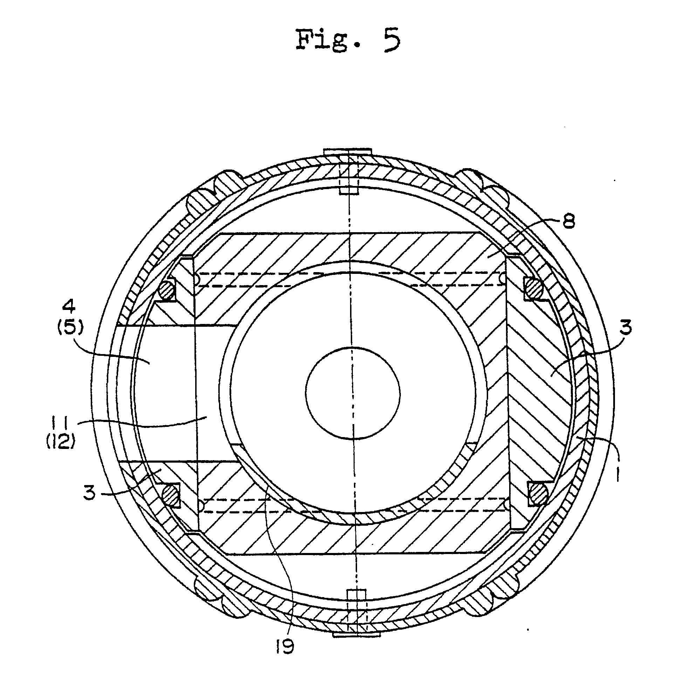

FIG. 5 is a longitudinal sectional front view of a cylinder type switching valve for mixing hot and cold waters according to the invention;

FIGS. 6 and 7 are lateral sectional side views of the switching valve;

FIG. 8 is a plan view of a lower disc of a disc type switching valve for mixing hot and cold waters;

FIG. 9 is a lateral sectional view of the same;

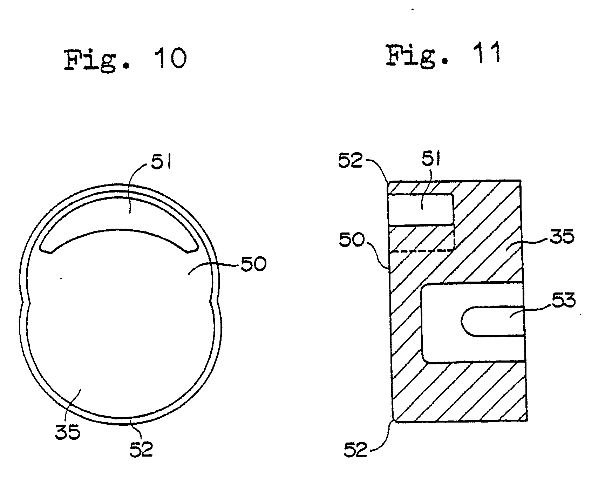

FIG. 10 is a plan view of an upper disc of the disc type switching valve;

FIG. 11 is a longitudinal sectional side view of the same;

FIG. 12 is a longitudinal sectional side view of an essential portion of a stationary cover of a lubricant tank;

FIGS. 13 to 16 are longitudinal sectional side views showing examples of a lubricant control valve;

FIG. 17 is a plan view of a lower disc of the disc type switching valve of another embodiment;

FIG. 18 is a longitudinal sectional side view of the same lower disc;

FIG. 19 is a plan view of the same lower disc;

FIG. 20 is a longitudinal sectional side view of the same lower disc;

FIG. 21 is a plan view of the same upper disc;

FIG. 22 is a longitudinal sectional side view of the same upper disc;

FIG. 23 is a longitudinal sectional side view of a disc type switching valve for mixing hot and cold waters of still another embodiment;

FIGS. 24 and 25 are plan views showing the state used as a disc valve for a cock, wherein FIG. 24 shows an open state, while FIG. 25 shows a closed state;

FIGS. 26 and 27 are explanatory views showing the state used as an electronic clock, wherein FIG. 26 shows a distribution type, while FIG. 27 shows an individual type;

FIG. 28 is a plan view of a lubricant flowout preventing-means; and

FIG. 29 is a front view of the same.

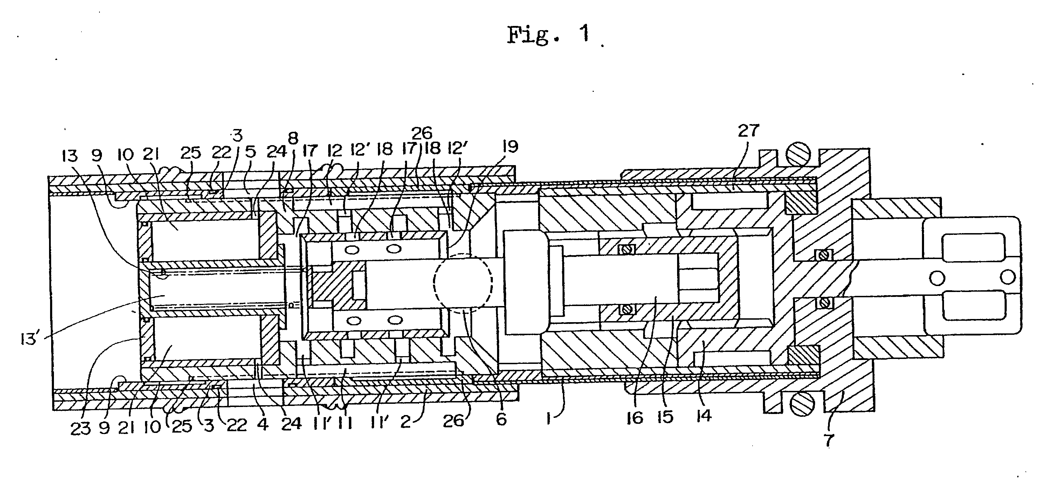

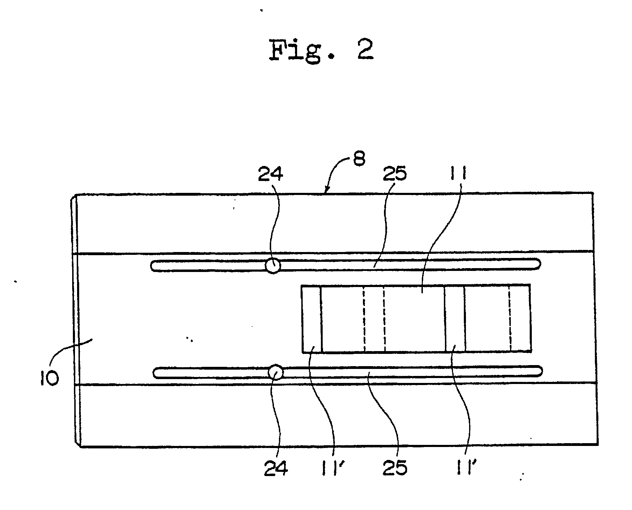

An embodiment of a cylinder type switching valve will be first described. In FIGS. 1 and 2, a cylinder 1 is formed in a cylindrical shape disposed in a mixture cock body and made of metal such as stainless steel or synthetic resin material such as polysulfone. The cylindrical cylinder 1 may be integrally molded, but may be split, molded and combined. An external pressure barrier metal cylinder 2 is fastened fixedly onto the outer surface of the cylinder 1, an inlet for supplying hot water and an inlet for supplying cold water are opened at the outer surface thereof, and watertight sealers for hot water and cold water are respectively disposed on the outsides of the peripheral edges of the inlets for supplying hot and cold waters. Slidable guide plates 3 for hot and cold waters are disposed oppositely on the inner surface of the cylinder 1, have inlets 4 for supplying hot water and inlets 5 for supplying cold water, opened corresponding to the inlet for supplying hot water and the inlet for supplying cold water of the external pressure barrier metal cylinder 2 and smooth guide surfaces formed axially thereon. The opening positions of the guide plates 3 respectively having the inlets 4 and 5 and/or the inlets 4 and 5 may not always be accurately opposed, but may be opposed at a proper angle or may be displaced in the axial direction. The guide surfaces of the guide plates 3 and 3 for hot and cold waters are preferably made thereon or over the entire surfaces thereof of a material having high hardness and durability such as special steel, new ceramic material, and it is further effective to mirror-finish the surfaces. An outlet 6 for hot and cold mixture water is opened at the position opposite axially to the inlets for supplying hot and cold waters to the cylindrical cylinder 1 for exhausting the hot, cold water supplied into the cylinder 1 or their mixture water. A holder 7 integrally fixes the cylinder 1, and an O-ring is provided inside the holder 7 oppositely to the outer surface of a driving shaft to be described in detail later to seal the pressures of the hot and cold waters in the cylinder 1 and to slidably hold the driving shaft. A switching valve 8 opens or closes the inlets 4 and 5 formed at the slidable guide plates 3 and 3 engaged within the cylinder 1, and formed in a square columnar cylinder having smooth sliding surfaces 10 and 10 opposed to the smooth guiding surfaces 9 and 9 formed inside the guide plates 3 and 3. Switching inlets 11 and 12 for hot and cold waters corresponding to the inlets 4 and 5 formed at the guide plates 3 and 3 for the hot and cold waters are opened at the sliding surfaces 10 and 10. A mixture valve 19 is pressed and lifted from its rear side by a spring 13, held by the threaded portion of a valve shaft 14, a threaded slider 15, a thermostat element 16 or a driving shaft having the same size instead thereof, slidably supported to the holder 7 to convert the rotation of the threaded portion of the valve shaft 14 into a sliding motion thereby to reversibly convert the openings of inlets 17 and 18 for hot and cold waters, thereby controlling temperature.

The smooth sliding surfaces 10 and 10 of the switching valve 9 move axially of the valve shaft 13 to slide along the smooth guide sliding surfaces 4 and 4 formed on the inner surface of the cylinder 1 to open or close the inlets 2 and 3 of the cylinder 1 in such a manner that the inlets 2 and the switching inlet 11 coincide or displace from each other and the inlet 3 and the switching inlet 12 coincide or displace from each other in response to the sliding position. The smooth sliding surfaces 10 and 10 of the switching valve 9 are preferably formed of a material having less physical change and less wear such as high hardness material, for example, special steel, new ceramic material, and it is further effective to mirror-finish the surface to reduce a wear resistance.

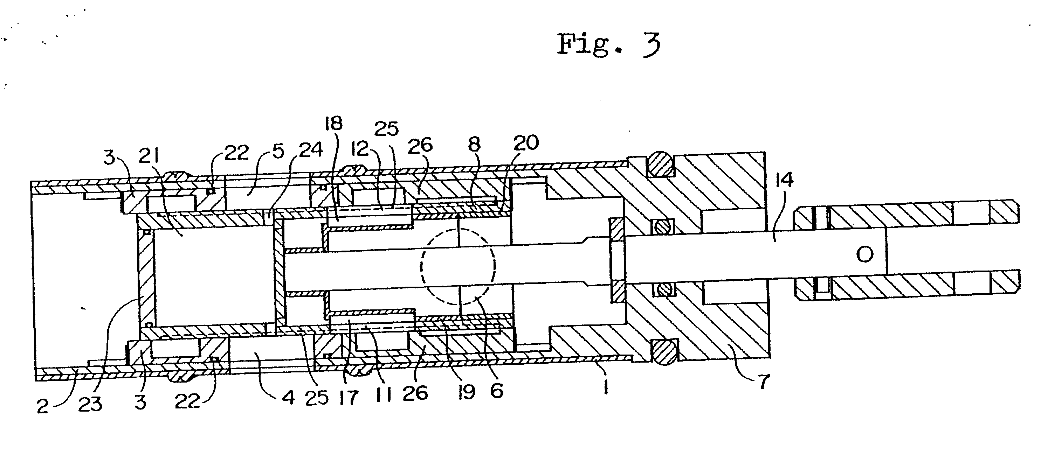

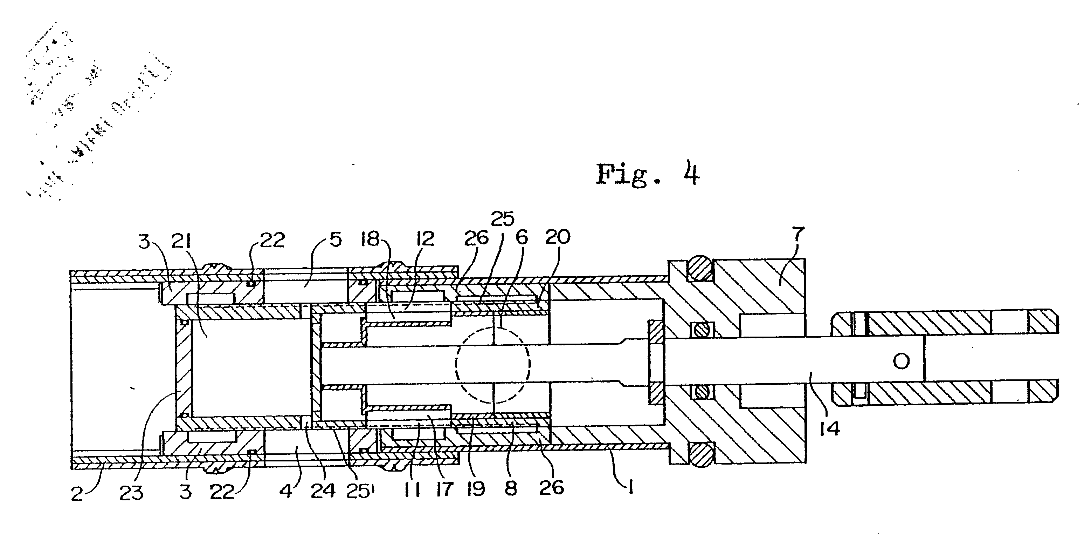

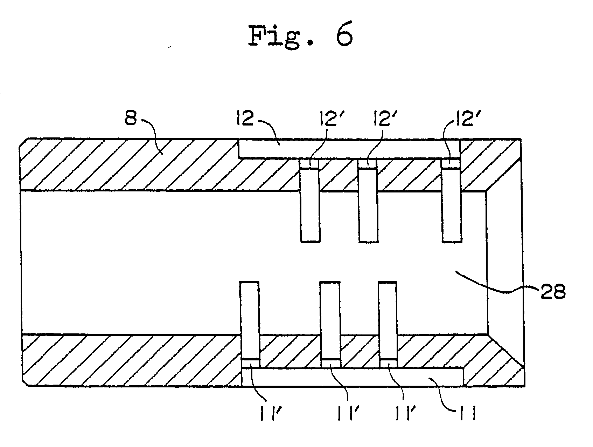

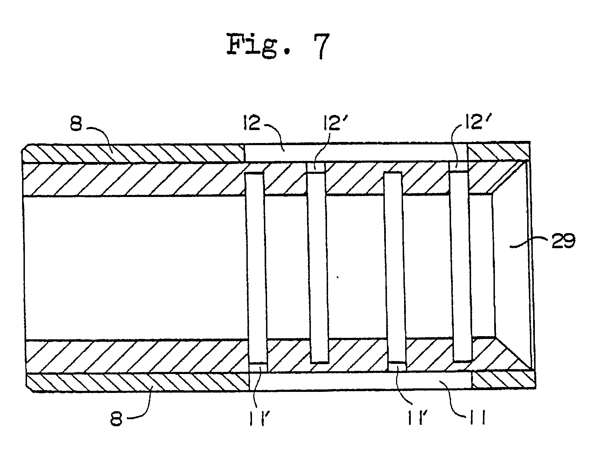

The structure of the switching valve 8 having a plurality of openings 11′, 11′,..., openings 12′, 12′,.. in the switching inlets 11 and 12 for hot and cold waters will be described. As shown in FIG. 1, the openings 11′, 11′,.. and the openings 12′, 12′,.. for hot and cold waters are alternately opened at the sides of the switching inlets 11 and 12 for hot and cold waters. As shown in FIG. 6, a bank 28 is formed elevationally at the center inside the switching valve 8 to be divided so that the switching inlets 11 and 12 for hot and cold waters are disposed at both sides to displace the flowing positions with respect to the switching inlets 11 and 12 at the openings 11′, 11′,.. and the openings 12′, 12′,.. When they are formed of metal, steps become considerably complicated. On the other hand, when the whole switching valve 8 is formed by sintering new ceramic material, the material is arbitrarily divided and molded before sintering, the divided and molded portions are fixedly bonded with water, alcohol, organic adhesive such as starch, or adhesive of the same type of material, then sintered to fusion-bond the entirety as a densely baked sintered material, and the manufacture is accordingly extremely ready. Further, as shown in FIG. 7, an inlet groove is formed on the outer surface of a metal liner-shaped cylinder 29, and the inside of the switching valve 8 can be readily formed by engaging it therewith. The mixture valve 19 reversibly adjusts the openings of a plurality of openings 11′, 11′,.. of the switching inlet 11 and a plurality of openings 12′, 12′,.. of the switching inlet 12 formed in the switching valve 8 to adjust the mixture amount of hot and cold waters. In the embodiment shown in FIG. 1, necessary number of inlets 17 and 18 for hot and cold waters, formed of circular through holes opposed to the openings 11′, 11′,.. and the openings 12′, 12′,.. are formed. In the embodiment shown in FIGS. 3 and 4, cylindrical valves formed with inlets 17 and 18 for hot and cold waters made of large openings on the side faces are provided and disposed in the switching valve 8. This mixture valve 19 is fixed directly to the valve shaft 14. There are employed a method of slidably providing a thermostat element 16 or a driving shaft of the same size instead of it and a spring in the embodiment shown in FIG. 1, and a method of fixing the front and rear sides by a clamping unit 20 and a lubricant tank 21 in the embodiment shown in FIGS. 3 and 4.

An O-ring 22 forms a watertight portion in contact with an external pressure shutting-off metal cylinder 2 to generate a necessary minimum limit pressing force and to form a watertight portion to the guide plate in pressure contact with the corresponding grooves of the guide plates 3 and 3. When a soft material is used as the O-ring 22 for bringing the inwardly curved surface of the external pressure shutting-off metal cylinder 2 into contact with the guide plates 3 and 3 disposed in the grooves along the curved surface, high watertightness can be obtained with a small margin, and effects of extremely reducing the sliding surface pressure of switching valves 10 and 10 with the guiding surfaces 9 and 9 of the guide plates 3 and 3 and decreasing the sliding load can be expected. A lubricant tank 21 is formed in a cylindrical shape, and disposed at the rear of the mixture valve 19. After lubricant is contained in the tank 21, the tank 21 is sealed slidably with a movable cover 23. The cover 23 is pressurized by hydraulic pressure of hot and cold waters in the cylinder 1 to enhance the internal pressure in the tank 21. Thus, the lubricant extruded from a lubricant outlet 24 is forcibly fed and supplemented under pressure to the smooth sliding surface of the switching valve 8. When the switching valve 8 and the guide plates 3 and 3 are vibrated some times, the lubricant is adhesively fed to both side faces to expect an effect of feeding the lubricant to be sequentially fed forwardly. A lubricant supply passage 25 is formed in a stripe groove in communication with the outlet 24 at the intermediate of the sealing portion of the sliding surface of the switching valve 8, and may be freely formed at a separate position if it is not contacted directly with hot or cold water so that no internal pressure is released. The lubricant supply passage 25 may be formed on both side surfaces or only one side of the guide plates 3 and 3. The lubricant supply passage 25 is formed as required to be effective to supply lubricant to the position separate from the lubricant outlet 24. A cavity spring holder 13′ is passed through the lubricant tank 21 and the movable cover 23, fixed to the lubricant tank 21 to holder the spring 13. Hot water is introduced from a switching inlet 11′ for hot water through the inlet 17 for hot water on the whole periphery of the mixture valve 19 to circulate the hot water to the cavity of the spring holder 13' to heat the lubricant of the lubricant tank 21 to resultantly reduce the density of the lubricant even at a low water temperature in winter to provide an effect of readily supplying the lubricant. No pressure slidable guide plates 26 are divided as required from the guide plates 3 and 3 as independently slidable guide plates, have no inlet for hot and cold water, become covers of the lubricant supply passage, and are so engaged substantially freely as not to generate a surface pressure as a cover for preventing lubricant from scattering. An operation can 27 is so fixed as to enclose the switching valve 8 and to rotatably hold the threaded portion of the valve shaft, and to movably engage the mixture valve 19 by the compression force of the spring 13 at the rear through the intermediate thermostat element 18 and the threaded slider 15. The thermostat element 16 outputs only hot water. When paraffin wax in the temperature sensor of the thermostat element 16 is expanded to the maximum limit, the inlet for hot water of the mixture valve 19 is pressed down to the lubricant tank 21. If it is formed in size to provide a passage longer than the maximum expansion, the thermostat element 16 is not damaged due to the contact with the switching valve.

The operation of the embodiment described above will be described. When the valve shaft 14 is pressed down by a lever provided at the end of the valve shaft 14, the operation can 27 is pressed down integrally with the whole structure contained therein to open the switching inlets 11 and 11 for hot and cold waters of the switching valve 8 corresponding to the inlets 4 and 5 for hot and cold waters of the slidable guide plates 3 and 3. When the valve shaft 14 is rotated, only the threaded slider 15, since the valve shaft 14 is fixed at the upper and lower ends, cooperated with the inner threads moves elevationally to cooperate with the thermostat element 16 or the driving shaft having the same size instead of it and the mixture valve 19, the flowing ratio of the hot and cold waters is determined in response to the rotating angle of the valve shaft 14 to obtain a predetermined temperature. Since a drive adjusting device proposed heretofore is disposed out of a valve body, pressure balance of a valve itself is scarcely taken. However, all the components are disposed in the operation can 27 to apply the inner cylindrical pressure only to the outer periphery of the valve shaft 14 to prevent the valve shaft from unintentionally protruding by the using pressure.

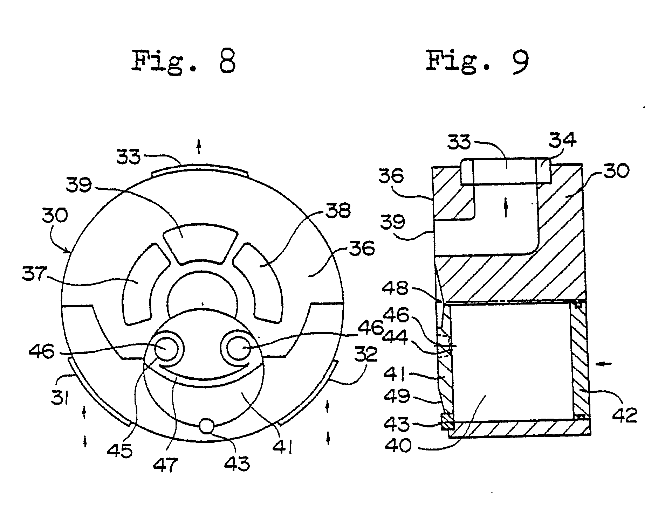

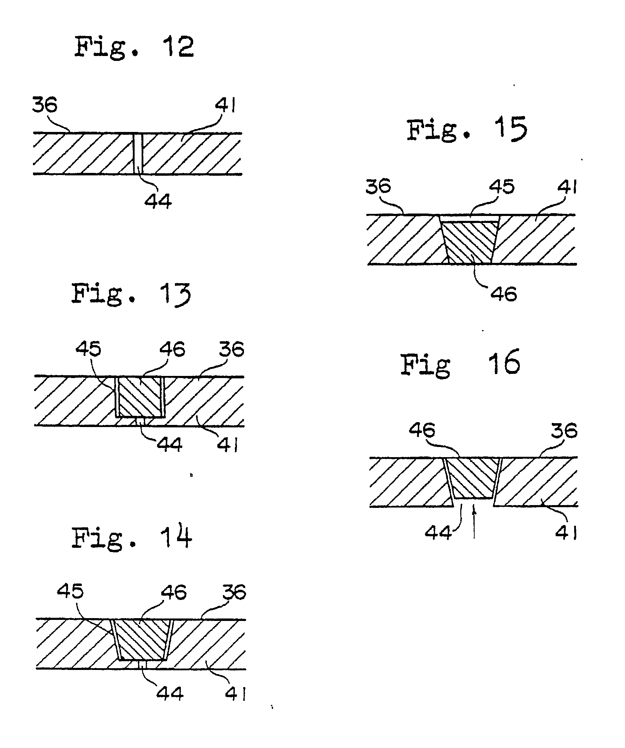

Another embodiment of a disc type switching valve will be described. In FIGS. 8 and the following drawings, the lower disc 30 of the disc type switching valve is inserted fixedly into the body of a cock. Inlets 31 and 32 for hot and cold waters, and an outlet 33 for hot and cold mixture water are opened at the outer surface of the periphery of the disc 30. A watertight rubber packing 34 is provided in each of the openings. The inlets 31 and 32, and the outlet 33 respectively communicate with switching outlets 37 and 38 for hot and cold waters, and an inlet 39 for hot and cold mixture water, opened substantially in the same circumference to a smooth guiding surface 36 in contact with an upper disc 35. Since the watertight rubber packings 34 of the inlets 31, 32 and the outlet 33 are disposed on the outer surface of the circumference, the packings 34 may be watertightly sealed with any large sealing margin, the lower disc 30 is not raised, and the surface pressure between the guiding surface 36 and the smooth sliding surface 50 of the upper disc 35 is not raised by the sealing margin to expect a low operating load different from the installation of the lower disc 30 in the bottom. The smooth guiding surface 36 is preferably mirror-polished, or may be preferably formed of a material such as a high hardness material, for example, special steel, new ceramic material. A lubricant tank 40 is formed in a cylindrical shape by utilizing the space of the lower disc 30 obtained by disposing a mixture water outlet 39 between the switching outlets 37 and 30 for hot and cold waters substantially on the same circumference, and composed of a stationary cover 41 provided at the side of the smooth guiding surface 36 and a movable cover 42 provided at opposite side thereto. The cover 41 is fixed by suitable means such as clamping pins 43, or may be formed integrally with the lower disc 30. The disc 42 is engaged slidably within the lubricant tank 40 to liquid-tightly seal the lubricant tank 40 to move by the pressure of the supplied cold, hot water or mixture water in a cock body. The total area of the area A of the bottom of the lower disc 30 including the movable cover 42 is so balanced with the total area B of the switching inlets 37 and 38 and the inlet for the hot and cold mixture water in the degree that the area A is extremely slightly larger than the area B thereby to eliminate influence of the pressure of hot, cold or mixture water to the lower disc to provide the surface pressure of necessary minimum limit, thereby expecting a minimum operating load. A lubricant outlet 44 is formed at the stationary cover 41 of the lubricant tank 40, and opened at the smooth guiding surface 36 of the lower disc 30. The lubricant in the lubricant tank 40 is extruded upon movement of the movable cover 42 to be forcibly supplied to the smooth guiding surface 36. The size of the lubricant outlet 44 is so selected as not to output a large quantity of lubricant at once, and a number of lubricant outlets 44 may be formed. As shown in FIGS. 13 to 16, a valve insertion hole 45 is so formed as to communicate with the lubricant outlet 44, and a lubricant control valve 46 is inserted into the valve insertion hole 45 to supply the lubricant through the gap between the valve insertion hole 45 and the lubricant control valve 46. The valve insertion hole 45 may be formed separately from the lubricant outlet 44 as shown in FIGS. 13 and 14, or be formed integrally with the lubricant outlet 44 as shown in FIGS. 15 and 16. The lubricant control valve 46 is formed in a columnar or inverted frustoconical shape, and formed in shape to be engaged with the valve insertion hole 45. The lubricant control vale 46 is formed of the same material as the lower disc 30, a high hardness material for forming a guiding surface 36 or further a suitable material such as a porous material for holding lubricant therein. In this case, the lubricant supplying amount is adjusted by selecting the size of the outer diameter of the lubricant control valve 46 to adjust the interval between the valve insertion hole 45 and the lubricant control valve 46. The lubricant control valve 46 having a smaller outer diameter is associated at the position where the lubricant consumption is fast, while the lubricant control valve 46 having a larger outer diameter is associated at the position where the lubricant temperature is relatively insulated. There may also be employed a type having the lubricant control valve 46 or a type having no lubricant o control valve. The lubricant tank 40 is composed as a cylindrical cassette having the movable cover 42, and which may be inserted into a space of the lower disc 30.

A recess 48 having a lubricant stopping bank 47 for stopping flowout of lubricant and a recess 49 having no lubricant stopping bank are formed at positions not directly contacting with hot, cold water jet streams except positions necessary to be watertightly sealed on the smooth guiding surface 36, and the recesses 48 and 49 have oblique surfaces smoothly inclining toward the guiding surface 36. The lubricant recovered to the recesses 48 and 49 is led upon movement of the position near the smooth guiding surface 36 and again effectively supplied to the guiding surface 36 to be consumed out.

The upper disc 35 is movably superposed on the upper surface of the lower disc 30, and a smooth sliding surface 50 in contact with the smooth guiding surface 36 of the lower disc 30 is provided. The sliding surface 50 is preferably mirror-polished, and may further be composed of a material such as a high hardness material, for example, special steel, new ceramic material. A mixture chamber 51 for reversibly changing the quantity of hot and cold waters supplied from the switching inlets 37 and 38 for hot and cold waters of the lower disc 30 to adjust the temperature of hot and cold mixture water and to adjust the quantity of hot and cold mixture water and for reversing the hot and cold mixture water to a cock body provided separately through the hot and cold mixture water passage of the lower disc 30. A chamfered portion 52 is largely formed at the peripheral edge of the sliding surface 50 and so formed as to wind again the lubricant extended from the upper disc 35 to the sliding surface 50 by the slide of the upper disc 35. A set hole 53 is formed on the upper surface of the upper disc 35, and a lever for driving the upper disc 35 is inserted into the set hole 53.

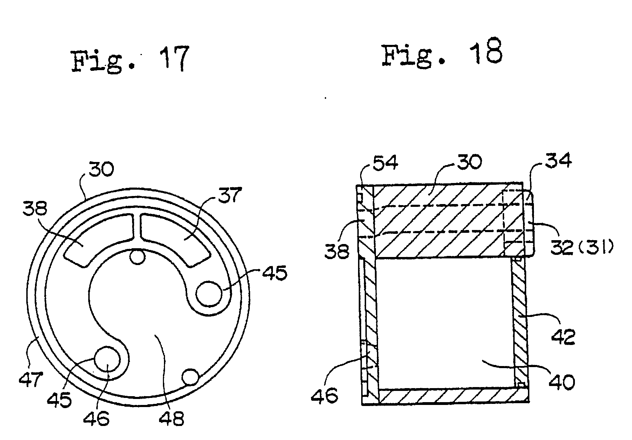

A still another embodiment shown in FIGS. 17 and 18 is a valve body for a mixture cock used particularly to drop hot and cold mixture water to a shower or a bathtub without necessity of normally adjusting the quantity of the water, and two or more valve bodies are associated to be electrically and electronically controlled for a hot water supplying apparatus or an electronic clock, which comprises a lubricant control valve 46, an intermediate disc 54 having a valve insertion hole 45 opened to be engaged with the lubricant control valve 46, a lubricant tank 40, a hot water passage for connecting a hot water inlet 31 to a switching inlet 37 for hot water, and a lower disc 30 formed with a cold water passage for connecting a cold water inlet 32 to a switching inlet 38 for cold water, and watertight rubber packings 34 for surrounding a hot water inlet 31 and a cold water inlet 32 are mounted in the bottom.

A smoothly oblique recess 48 for recovering and again supplying the fed lubricant and a lubricant stopping band 47 for preventing the lubricant from flowing out of the valve body are surrounded on the outer periphery.

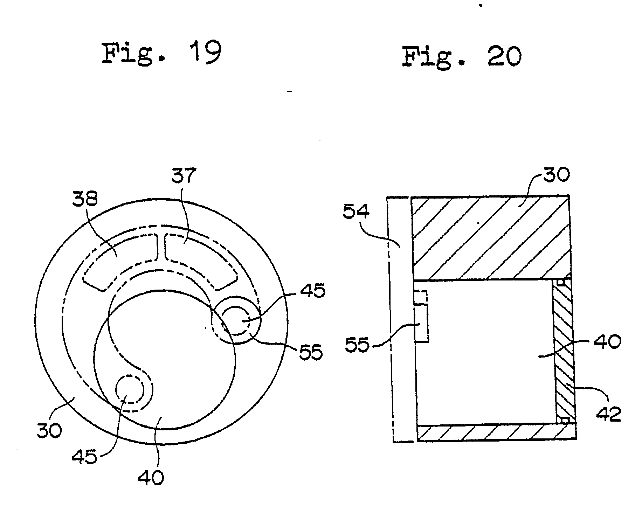

As shown in FIGS. 19 and 20, an example of a passage 55 for supplying lubricant to a valve insertion hole 34 for engaging a lubricant control valve 46 not disposed directly above the lubricant tank 40 to be formed in the lower disc 30 to mount the lubricant control valve at necessary position is illustrated. The lubricant passage 55 may be formed on the rear surface of the intermediate disc 54.

The various mechanical elements of the lower disc 30 may be formed at the back body without forming at the lower disc 30.

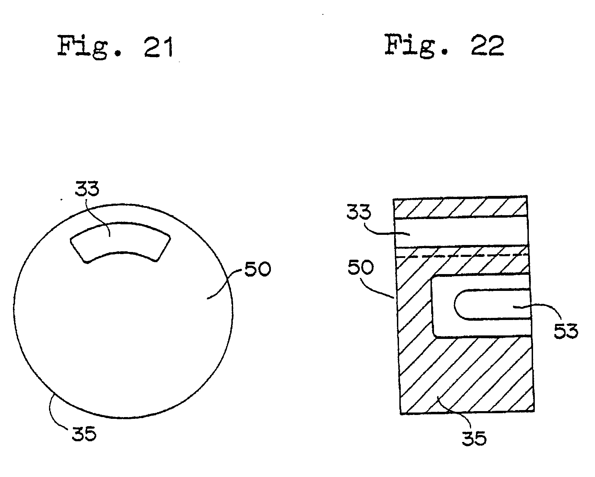

FIGS. 21 and 22 show an example of an upper disc 35 of the movable side for matching an intermediate disc 54 to a sliding surface 50, and hot and cold mixture water outlet 33 passing elevationally the upper disc 35 is opened.

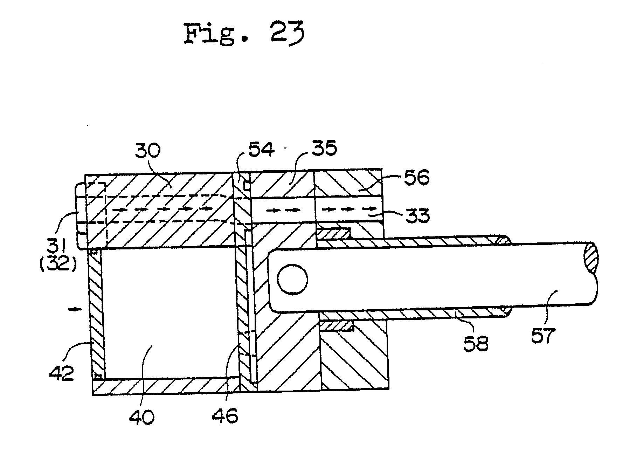

An example of FIG. 23 shows an upper disc 35 of the shape split into the same shapes and laminated. Its upper quantity adjusting disc 56 adjusts the quantity of mixed hot and cold waters, and operating shafts 57 and 58 for individually driving them are composed as inner and outer shafts. It is shown that the quantity of mixed hot and cold water can be adjusted by rotating together the inner and outer operating shafts 57 and 58 or rotating only the quantity adjusting disc 56 by the operating shaft 58.

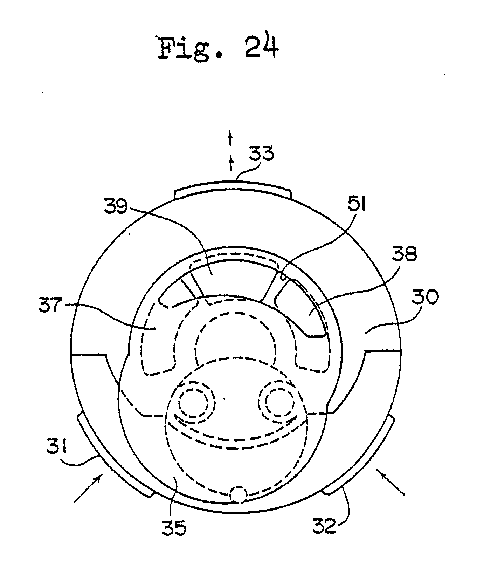

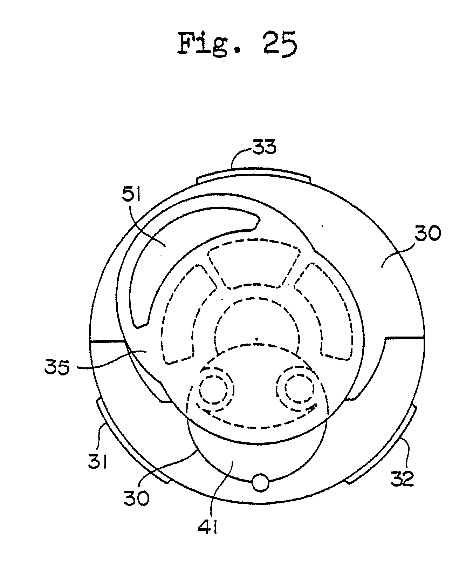

An example of FIGS. 24 and 25 shows the state used as a disc valve for a cock, wherein FIG. 24 shows an open state, and FIG. 25 shows a closed state. Hot water supplied through the hot water inlet 31 of the lower disc 30 and the switching inlet 37 for not water and cold water supplied through the cold water inlet 32 of the lower disc 30 and the switching inlet 38 for cold water are mixed and inverted by the mixture chamber 51 of the upper disc 35, and the mixture hot and cold water of the lower disc 30 is returned though the inlet 39 from the outlet 33 for hot and cold mixture water to the cock body. In this embodiment, the upper disc 35 is irregularly moved upon opening and closing of the cock.

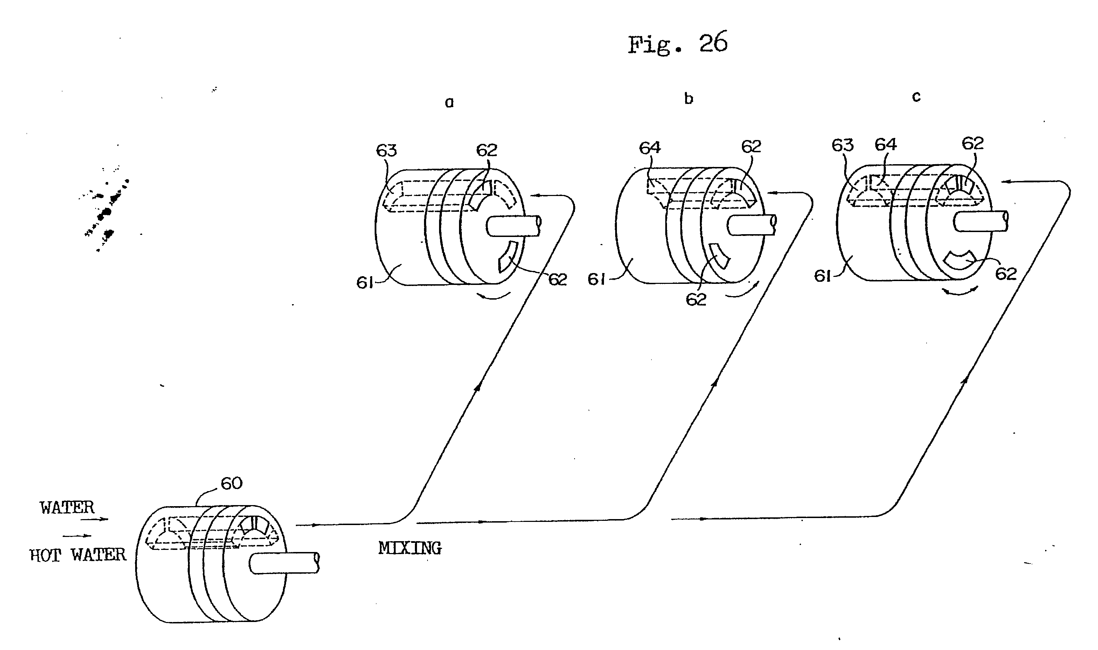

FIG. 26 shows the state used as a valve for momentary gas hot water supplying apparatus or an electronic cock. This apparatus comprises a hot and cold mixture water switching valve 60 of temperature control side, and a hot and cold mixture switching valve 61 of distribution side for adjusting the quantity of hot and cold mixture water. A mixture water inlet 62 and selective passage A 63 or B 64 are formed in the switching valve 61. When the mixture water inlet 62 in the switching valve 61 is disposed in a state a, the inlet 62 communicates with the A distribution passage 63. For example, the mixture water is supplied to a kitchen through the A distribution passage 63. When the mixture water inlet 62 in the switching valve 61 is disposed in a state b, the inlet 62 communicates with the 8 distribution passage 64. For instance, the mixture water is supplied to a shower by the B distribution passage 64. Further, when the inlet 62 in the switching valve 61 is disposed in a state c, the inlet 62 communicates with both the A and B distribution passages 63 and 64, and the mixture water is supplied to the kitchen by the A passage 63 and to the shower by the B passage 64.

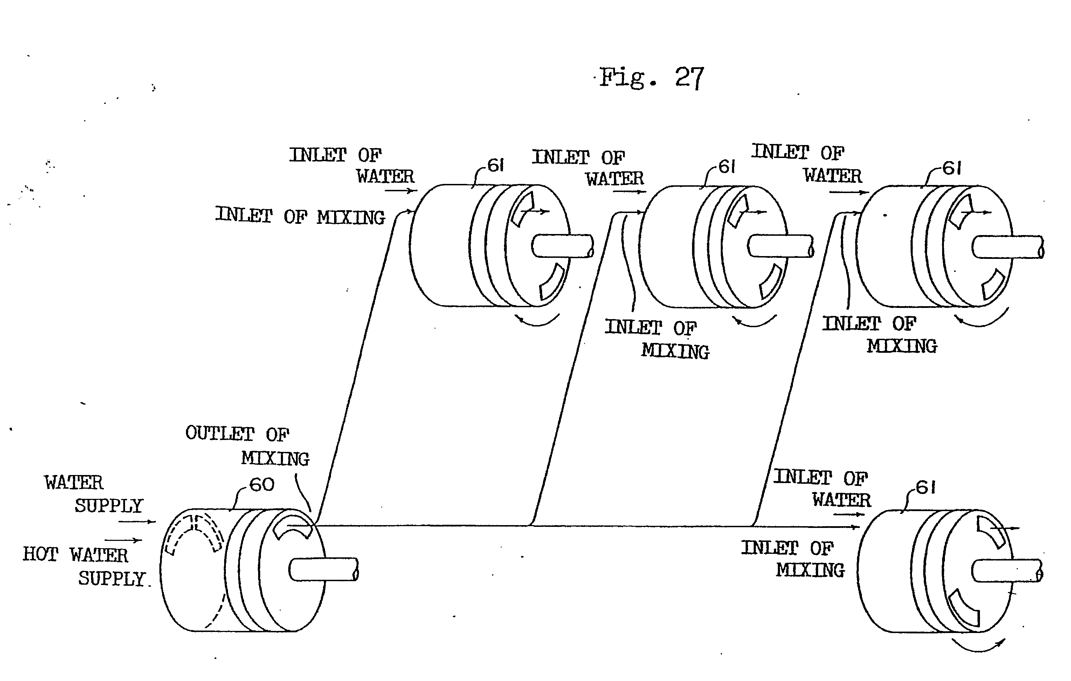

An example of FIG. 27 shows the case that the switching valve 61 of the example in FIG. 26 is separately provided at the respective destinations of the distributions. In this case, the hot and cold mixture waters are, of course, supplied, and the water can be momentarily selected at the destinations.

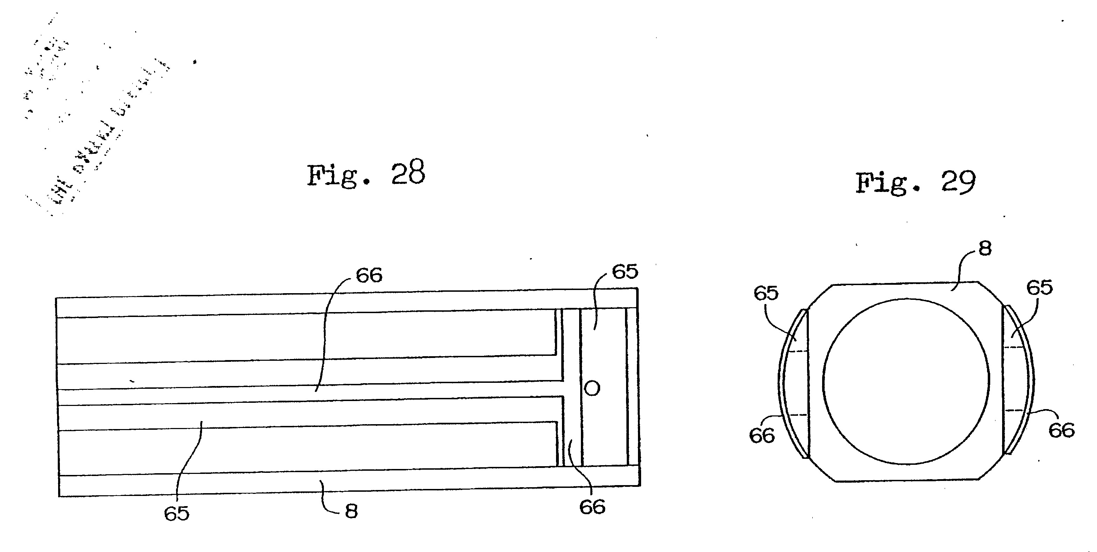

FIGS. 28 and 29 show an example of preventing lubricant from flowing out. A T-shaped bar 65 is provided at the outside face of the switching vale 8, and a friction rubber 66 is provided on the upper surface of the T-shaped bar 65.

According to the present invention as described above, a lubricant tank having a lubricant outlet opened at the sliding surface of a switching valve is provided to directly supply necessary lubricant to the sliding surface of the switching valve, thereby always readily sliding to open or close the switching valve.

According to the invention, a lubricant tank having a lubricant outlet opened at the sliding surface of a switching valve is provided to store a large quantity of lubricant in the tank to hold the supply of the lubricant to the sliding surface for a long period of time, thereby improving the number of durable life.

As mentioned above, according to the invention, a cylindrical lubricant tank is provided in a valve body, a movable cover is slidably engaged with one side of the cylindrical lubricant tank, and the movable cover is so disposed as to be pressurized by hydraulic pressure of hot, cold water in the valve body to automatically pressurize the movable cover by the hydraulic pressure in the valve body to pressure lubricant contained in the lubricant tank to forcibly supply the lubricant from the lubricant outlet to the sliding surface of the switching valve to stably supply the lubricant to necessary position and to always readily slide to open or close the switching valve.

According to the invention, a movable cover is slidably engaged with a cylindrical lubricant tank, thereby entirely utilizing the lubricant contained in the lubricant tank by the slide of the movable cover.

As described above, according to the invention, a valve insertion port is formed at the lubricant outlet opened at the sliding surface of the switching valve, and a lubricant control valve is engaged within the valve insertion port to shut off the lubricant exhausted from the lubricant tank by the lubricant control valve to extrude the lubricant from a small gap formed between the outer surface of the lubricant control valve and the inner surface of the valve insertion port to supply the lubricant in small quantity necessary to slide the switching valve and to effectively supply the lubricant from the outer surface of the lubricant control valve to the wide range of the sliding surface, thereby largely extending the period of readily sliding the switching valve.

According to the invention, a lubricant supply passage is formed at the sliding surface of the switching valve in connection to the lubricant outlet opened at the sliding surface of the switching valve to supply the lubricant extruded from the lubricant outlet through the lubricant supply passage to the position separated from the lubricant outlet, thereby readily sliding the switching valve.

According to the invention, a watertight O-ring disposed in a groove formed to surround inlets for hot and cold waters, disposed on the slide guiding plates for hot and cold waters is contacted under pressure with the inner peripheral surface of the external pressure shutting-off metal cylinder to readily form a watertight area having high reliability on the slide guiding plates for hot and cold waters and the inner peripheral surface of the external pressure shutting-off metal cylinder.

According to the invention, the O-ring provided to form the watertight area between the slide guiding plate and the inner peripheral surface of the external pressure shutting-off metal cylinder for hot and cold waters is formed of soft material to provide high watertightness with small sealing margin, thereby minimizing the surface pressure of the guiding plate and the switching valve due to the increase of the sealing margin and to reduce the switching operating load by the guiding plate and the switching valve.

According to the invention, a groove having a curved surface along the curved surface of the external pressure shutting-off metal cylinder is formed to form a watertight area having high reliability readily by the O-ring.

According to the invention, hot water is supplied to a spring holder passing through the lubricant tank to heat the lubricant of the lubricant tank to reduce the density of the lubricant to provide the spring holder for smoothly supplying the lubricant.

According to the invention, a plurality of inlets for hot and cold waters for controlling temperature are formed inside the switching valve to accelerate control speed while increasing the flow rate of the water by the switching valve.

According to the invention, the inlets for hot and cold waters for controlling temperature are so alternately formed inside and outside the switching valve by the continuous combination of alternately hot, cold, hot and cold waters or cold, cold and hot and hot waters by the switching valve.

According to the invention, a switching valve having a plurality of temperature controlling inlets for hot and cold waters is split and formed inside and outside the switching valve, adhesively baked to be readily integrally molded.

According to the invention, a switching valve having a plurality of temperature controlling inlets for hot and cold waters is split and formed inside and outside the switching valve is split into outer and inner cylinders as metal readily molded in an inner cylinder having a complicated shape, and engaged integrally.

According to the invention, a plurality of inlets for hot and cold waters are formed in a circular, elliptical or rhombic shape, and a mixture valve for improving the accuracy of controlling temperature is provided.

According to the invention, inlets for hot and cold waters at both sides and a plurality of inlets for hot and cold waters formed in a circular, elliptical or rhombic shape, disposed on the outer surface of the cylinder are provided, and a mixture valve having a large flow rate and fast controlling speed is provided.

According to the invention, inlets for hot and cold waters are alternately disposed, and a mixture valve for improving the mixing performance of hot and cold waters is provided.

According to the invention, the inlet faces of both sides of the mixture valve and the switching valve are moved without plane contact due to the maximum expansion of a thermostat without necessity of means for preventing a thermostat element from damaging due to expansion in the switching valve and mixture valve.

According to the invention, main driving means for sliding and rotating is contained together with a controller in the same operation can, and the mechanism of the can composed to apply the internal cylindrical pressure only to the minimum diameter of the driving shaft.

According to the invention, inlets for hot and cold waters are disposed on the same circumference, inlets for mixture, cold and hot waters are disposed between both the inlets for hot and cold waters, and a lower disc having a space for mounting a lubricant tank is provided.

According to the invention, inlets for hot, cold waters and mixture hot and cold waters are disposed on the outer surface, a watertight packing is so provided as not to raise the sliding surface pressure by the sealing margin, and a lower disc for reducing an operating load is provided.

According to the invention, the opening area of inlets for hot and cold waters and outlet for mixture water of a lower disc is balanced with the area of the bottom of the lower disc around the periphery including a movable cover slidably engaged with the lubricant tank, the lifting force of the lower disc due to the pressure of hot, cold or mixture water is canceled by the reaction of the upper opening, the sliding surface pressure is necessarily minimized, and the lower disc for largely reducing the operating load is provided.

The present invention is provided with the lubricant tank to supply lubricant to smooth sliding surface of the switching valve and the smooth sliding surface of the slide guiding plates corresponding to the switching valve. However, instead of supplying the lubricant, a hard carbon layer is formed by sputtering on the surface of the smooth sliding surface of the switching valve and the slide guiding plates corresponding to the switching valve, or the sliding surfaces are formed of ceramic material and hard carbon to form a covering with hot water on the surface by the moistening action of the carbon, thereby readily sliding it. In this case, the hardness of the carbon is preferably HV1,000 or more of Vickers hardness, and the constitution of the present invention except the lubricant tank can be utilized as it is.

## Claims

1. A switching valve for mixing hot and cold waters, comprising:
a cylindrical lubricant tank having a lubricant outlet opened at the sliding surface of a switching valve in a valve body, and
a movable cover slidably engaged with one side of the cylindrical lubricant tank, said movable cover so disposed as to be pressurized by hydraulic pressure of hot, cold water in the valve body.

2. The switching valve in accordance with claim 1, wherein a valve insertion port is formed at the lubricant outlet opened at the sliding surface of the switching valve, and a lubricant control valve is engaged within the valve insertion port.

3. The switching valve in accordance with claim 1, wherein a lubricant supply passage is formed at the sliding surface of the switching valve in connection to the lubricant outlet opened at the sliding surface of the switching valve.

4. The switching valve in accordance with any of claims 1, 2 and 3, wherein said switching valve is a cylinder or disc type switching valve.

5. The switching valve in accordance with claim 1, wherein hot water is supplied to a spring holder passing through the lubricant tank to heat the lubricant of the lubricant tank.

6. The switching valve in accordance with claim 1, wherein a watertight O-ring disposed in a groove formed to surround inlets for hot and cold waters, disposed on the slide guiding plates for hot and cold waters is contacted under pressure with the inner peripheral surface of the external pressure shutting-off metal cylinder to readily form a watertight area.

7. The switching valve in accordance with claim 6, wherein the O-ring provided to form the watertight area between the slide guiding plate and the inner peripheral surface of the external pressure shutting-off metal cylinder for hot and cold waters is formed of soft material to provide high watertightness with small sealing margin.

8. The switching valve in accordance with claim 6, wherein a groove having a curved surface along the curved surface of the external pressure shutting-off metal cylinder is formed to form a watertight area.

9. The switching valve in accordance with claim 1, wherein a plurality of inlets for hot and cold waters for controlling temperature are formed inside the switching valve.

10. The switching valve in accordance with claim 1, wherein the inlets for hot and cold waters for controlling temperature are so alternately formed inside and outside the switching valve by the continuous combination of alternately hot, cold, hot and cold waters or cold, cold and hot and hot waters by the switching valve.

11. The switching valve in accordance with claim 1, wherein a switching valve having a plurality of temperature controlling inlets for hot and cold waters is split and formed inside and outside the switching valve, adhesively baked to be readily integrally molded.

12. The switching valve in accordance with claim 1, wherein a switching valve having a plurality of temperature controlling inlets for hot and cold waters is split and formed inside and outside the switching valve into outer and inner cylinders as metal readily molded in an inner cylinder having a complicated shape, and engaged integrally

13. The switching valve in accordance with claim 1, wherein a plurality of inlets for hot and cold waters on a circumference are formed in a circular, elliptical or rhombic shape by a mixture valve.

14. The switching valve in accordance with claim 1, wherein inlets for hot and cold waters at both sides and a plurality of inlets for hot and cold waters formed in a circular, elliptical or rhombic shape, disposed on the outer surface of the cylinder are provided by a mixture valve.

15. The switching valve in accordance with claim 1, wherein the inlet faces of both sides of the mixture valve and the switching valve are moved without plane contact due to the maximum expansion of a thermostat by a mixture valve.

16. The switching valve in accordance with claim 1, wherein main driving means for sliding and rotating is contained together with a controller in the same operation can, and the mechanism of the can composed to apply the internal cylindrical pressure only to the minimum diameter of the driving shaft.

17. The switching valve in accordance with claim 1, wherein inlets for hot and cold waters are disposed on the same circumference, inlets for mixture, cold and hot waters are disposed between both the inlets for hot and cold waters, and a lower disc having a space for mounting a lubricant tank is provided.

18. The switching valve in accordance with claim 1, wherein inlets for hot, cold waters and mixture hot and cold waters are disposed on the outer surface, a watertight packing is so provided as not to raise the sliding surface pressure by the sealing margin, and a lower disc for reducing an operating load is provided.

19. The switching valve in accordance with claim 1, wherein the opening area of inlets for hot and cold waters and outlet for mixture water of a lower disc is balanced with the area of the bottom of the lower disc around the periphery including a movable cover slidably engaged with the lubricant tank.

Fig. 1

EP 0 396 350 A2

Fig. 2

# Fig. 3

EP 0 396 350 A2

# Fig. 4

Fig. 5

# Fig. 6

Fig. 7

Fig. 8

Fig. 9

Fig. 10

Fig. 11

## Fig. 12

36          41

44

## Fig. 15

36     45     41

46

## Fig. 13

45     46     36

44     41

## Fig. 16

46          36

44          41

## Fig. 14

45     46     36

44     41

Fig. 17

Fig. 18

Fig. 19

Fig. 20

Fig. 21

Fig. 22

33

50

35

33

50

53

35

Fig. 23

# Fig. 24

Fig. 25

Fig. 26

WATER →

HOT WATER →

MIXING

EP 0 396 350 A2

Fig. 27

INLET OF WATER

INLET OF MIXING

INLET OF WATER

INLET OF WATER

61

61

61

INLET OF MIXING

INLET OF MIXING

OUTLET OF MIXING

60

WATER SUPPLY

HOT WATER SUPPLY

INLET OF WATER

61

INLET OF MIXING

EP 0 396 350 A2

Fig. 28

Fig. 29

EP 0 396 350 A2